# EUROPEAN PATENT APPLICATION

(11) **EP 2 130 586 A1**
(43) Date of publication of application: **09.12.2009**
(21) Application number: 08157770.2
(22) Date of filing: 06.06.2008
(51) Int. Cl.: B01J 29/40, C01B 39/36, C10G 11/05

(54) **Process for making crystalline metallosilicates**

(71) Applicant: Total Petrochemicals Research Feluy, 7181 Seneffe (Feluy) (BE)
(72) Inventor: BULUT, Metin, B-3001, Heverlee (Leuven) (BE); JACOBS, Pierre, B-1686, Gooik (BE); MINOUX, Delphine, B-7181, Familleureux (BE); NESTERENKO, Nikolai, B-1400, Nivelles (BE); DATH, Jean-Pierre, 7970, BELOEIL HAINAULT (BE); VAN DONK, Sander, B-1180, Uccle (BE)
(74) Representative: Leyder, Francis

(57) **Abstract**

The present invention provides a method for preparing a metallosilicate of MFI type, wherein organic templates, seeding techniques, using low aliphatic alcohols miscible with water or homogeneous starting solutions are not required.

The present invention relates to a process for making a crystalline metallosilicate with high Si/Metal ratio comprising:
a) providing an aqueous medium comprising OH⁻ anions and a metal source,
b) providing an aqueous medium comprising an inorganic water insoluble source of silicon,
c) optionally providing a non aqueous liquid medium comprising optionally an organic source of silica,
d) mixing the medium a), b) and the optional c) at conditions effective to crystallize the desired metallosilicate,
e) recovering the desired metallosilicate,

wherein in the mixture a)+b)+c), before crystallization,
the ratio Si org/Si inorganic is < 0.3 , advantageously < 0.2 and preferably 0,
the molar ratio OH⁻/SiO₂ is at least 0.3, preferably from 0.3 to 0.6 more preferably from 0.33 to 0.6 .

In another embodiment steps e), f) and g) are inserted before recovering the desired metallosilicate :
e) cooling down the reaction mixture a)+b)+c) to about room temperature,
f) decreasing the pH of the reaction mixture by at least 0.1 preferably by 0.3 to 4, more preferably by 0.5 to 3,
g) subjecting the resulting mixture of step f) at conditions effective to continue the crystallization of the desired metallosilicate.

## Description

### [Field of the invention]

The present invention relates to a process for making crystalline metallosilicates without use of a templating agent or seeding zeolites. Zeolites have been demonstrated to possess catalytic properties for various types of hydrocarbon conversions. In addition, the zeolites have been used as adsorbents and catalyst carriers for various types of hydrocarbon conversion processes, and other applications. More precisely the crystalline metallosilicates made by the process of the present invention comprise crystallites with MFI structure made from the solution containing low aluminium concentration made without organic structure agent.

### [Background of the invention]

Crystalline metallosilicates are ordered, porous, crystalline material having a definite crystalline structure as determined by x-ray diffraction, possessing a large number of smaller cavities that may be interconnected by pores. The dimensions of these channels or pores are such as to allow adsorption of molecules with certain dimensions while rejecting those with larger dimensions. The interstitial spaces or channels formed by the crystalline network enable zeolites to be used as molecular sieves in separation processes and catalysts and catalyst supports in a wide variety of hydrocarbon conversion processes. Zeolites or metallosilicates are comprised of a lattice of silicon oxide and optionally a metal oxide combined optionally with exchangeable cations such as alkali or alkaline earth metal ions. Although the term "zeolites" includes materials containing silica and optionally alumina, it is recognized that the silica and alumina portions may be replaced in whole or in part with other oxides. For example, germanium oxide can replace the silica portion. The metal cations other than silicon in the oxide framework of metallosilicates may be iron, aluminium, titanium, gallium and boron. Accordingly, the term "Zeolites" means here microporous crystalline metallosilicates materials. The catalytic properties of metallosilicates are the result of the presence of elements different than silicon in the framework of the zeolite. Substitution of metal cations for silicon in the oxide framework gives rise to potential catalytic active sites. The best known metallosilicates are aluminosilicates that exhibit acidic groups in the pores of the crystals. The substitution of silica with elements such as alumina with a lower valence state creates a positive charge deficiency, which can be compensated by a cation such as a hydrogen ion. The acidity of the zeolite can be on the surface of the zeolite and also within the channels of the zeolite.

US 4257885 relates to a synthetic crystalline zeolitic molecular sieve having a chemical composition expressed in terms of moles of oxides of 0.8-3.0 M₂O : Al₂ O₃ : 10-100 SiO₂ : 0-40 H₂ O wherein M represents a metallic cation and n represents the valence of M, said zeolitic molecular sieve after being calcined in air at a temperature of 600°C having an infrared spectrum exhibiting substantially no absorption within the range of 3600-3100 cm⁻¹. The process for preparing said composition comprises forming an aqueous reaction mixture consisting essentially of inorganic reagents and having the following composition in terms of mole ratios of oxides:
- SiO₂ /Al₂ O₃ -10 to 100
- Na₂ O/SiO₂ -0.2 to 0.3 (equivalent to OH⁻/ SiO₂ from 0.1 to 0.15)
- H₂ O/(Na_{2/n} O⁺M₂ O)-20 to 600
- (Na₂ O+M_{2/n} O)/SiO₂ -0.02 to 0.5
wherein M represents a metal cation selected from Groups I and II of the Periodic System of Elements and n represents the valence of M, and maintaining said reaction mixture for a period of from 6 to 200 hours at a temperature of from 80°C to 210°C at autogenous pressure.

US 5385714 (=EP 406474) relates to a synthetic crystalline aluminosilicate prepared by an inorganic process from a reaction mixture, which contains, in an aqueous alkaline medium SiO₂ and Al₂O₃ or their hydrated derivatives or alkali silicates and aluminates, mineralizers and optionally seeding crystals, the reaction mixture containing: SiO₂ /Al₂O₃ in molar ratio of 15-40, OH⁻/ SiO₂ in molar ratio 0.1-0.2, and H₂O/SiO₂ in molar ratio 20-60. The aluminosilicate produced by the process has a chemical composition expressed in molar ratios as: 0-3 M2O : Al₂O₃:15-40 SiO₂: 0-40 H2O, where M represents an alkali cation. The aluminosilicate is useful in the preparation of catalysts and adsorbents.

US 5696043 describes synthetic crystalline aluminosilicates produced by hydrothermal crystallization from an inorganic aqueous alkaline reaction mixture containing silicon dioxide and aluminum oxide or their hydrated derivatives or alkali silicates and aluminates and mineral acid. Preferably, relatively inexpensive starting materials of sodium water glass (sodium silicate) and sulfuric acid as mineral acid are used. The reaction mixture contains SiO₂ /Al₂O₃ in a molar ratio of between about 15 and about 40, preferably between about 20 to about 30; OH⁻/ SiO₂ at a molar ratio between about 0.1 to about 0.2, preferably between about 0.13 to about 0.16; and H₂O/SiO₂ in a molar ratio between about 20 and about 60, preferably between about 30 to about 40. The reaction mixture, contained in a stirred autoclave, is subjected to hydrothermal crystallization conditions. In general, the reaction is conducted at a constant temperature between about 100°C to 325°C, preferably between about 180°C. to about 250°C for a time period of about 1 to about 100 hours, preferably about 24 hours during which the crystalline product precipitates out.

US 5407654 describes crystalline aluminosilicates of the pentasil type produced by hydrothermal crystallization from an inorganic aqueous alkaline reaction mixture containing silicon dioxide and aluminum oxide or their hydrated derivatives or alkali silicates and aluminates and mineral acid. Preferably, relatively inexpensive starting materials of sodium water glass (sodium silicate) and sulfuric acid as mineral acid are used. The reaction mixture contains SiO₂/Al₂O₃ at a molar ratio of between about 15 and about 40, preferably between about 20 to about 30; OH⁻/ SiO₂ at a molar ratio between about 0.1 to about 0.2, preferably between about 0.13 to about 0.16; and H₂O/SiO₂ at a molar ratio between about 20 and about 60, preferably between about 30 to about 40.

EP 1478596 describes a process for synthesizing a crystalline aluminosilicate zeolite having an MFI structure comprising crystallizing said zeolite from an alkaline aqueous reaction mixture that comprises (i) sources of silica and alumina and (ii) an amorphous aluminosilicate nucleating gel with an SiO₂ /Al₂O₃ molar ratio of from 10 to less than 20, said reaction mixture not containing an organic template.

US 5240892 describes a process for preparing, in the absence of organic directing agent, a porous crystalline silicate having the structure of ZSM-5 having a sorption capacity for mesitylene of at least about 3 weight percent which comprises:
a) providing a crystallization reaction mixture which includes a source of at least one component of crystalline silicate framework element, including silicon, wherein the solids content of said source in the crystallization reaction mixture is at least 35 weight percent;
b) maintaining the crystallization temperature at less than about 250°C
c) maintaining agitation conditions during crystallization sufficient to result in said crystal size;
d) maintaining a mole ratio of OH⁻/ SiO₂ in the reaction mixture of at least about 0.11; and
e) recovering porous crystalline silicate crystals.

In the examples the higher value of OH⁻/ SiO₂ is 0.164.

US 5254327 relates to zeolitic material with a crystalline structure of MFI type having a ratio of silica to alumina which is lower than 26, and is hydrothermally prepared without organic template reagents or seeding procedures. Crystalline structure is obtained by forming a mixture of a silicon dioxide source, an alkali metal hydroxide, an aluminum source and water, all reactants with the following molar ratios:
SiO₂ /Al₂O₃ from 14 to 22
OH⁻/ SiO₂ from 0.05 to 0.08
M₂O/ SiO₂ from 0.08 to 0.11
H₂O/SiO₂ from 14 to 22
where M is an alkali metal, and reacting the mixture at a temperature from 160° to 180° C. for 40-80 hours. The material is characterized by X-ray diffraction, and has good cracking activity and improved selectivity for gasoline octanes.

US 4,562,055 discloses a process for the preparation of zeolites similar to ZSM-5. The disclosed procedure provides a zeolite similar to ZSM-5 which has a high purity and a high silica to alumina ratio. Preparation of this zeolite, however, requires preparation of a homogeneous phase compound of a granular amorphous aluminosilicate in an aqueous solution of an alkali metal hydroxide and/or an alkali metal silicate.

EP 94693 describes the making of a zeolite by simply using a silica source, an alumina source, an aqueous solution of an alkali metal hydroxide which are usually employed in the synthesis of zeolites, and a starting zeolite selected from zeolites ZSM-5 and zeolites produced by the process of this invention as starting materials. The starting zeolite ZSM-5 which can be a seed of the resulting zeolite in the process of this invention is a known zeolite which can be obtained in a known manner by subjecting a combination of an alkali metal cations and a certain organic cations together with a silica source and an alumina source to hydrothermal synthesis conditions in an alkaline aqueous solution. For example, U.S. Pat. No. 3,702,886 discloses a method in which tetra-n-propyl ammonium hydroxide is used as a source of the organic cation; British Patent No. 2,018,232, a method in which n-butyl alcohol and ammonia are used; British Patent No. 2,058,033, a method in which tri-n-propylamine and a n-propyl halide are used; and Japanese Laid-Open Patent Publication No. 17920/1981, a method in which an alcoholamine is used.

It is an object of the present invention to provide a method for preparing a metallosilicate of MFI type, wherein organic templates, seeding techniques, using low aliphatic alcohols miscible with water or homogeneous starting solutions are not required. In the present invention the organic template refers to an organic component comprising nitrogen or phosphorus.

### [Brief summary of the invention]

The present invention relates to a process for making a crystalline metallosilicate with high Si/Metal ratio comprising:
a) providing an aqueous medium comprising OH⁻ anions and a metal source,
b) providing an aqueous medium comprising an inorganic water insoluble source of silicon,
c) optionally providing a non aqueous liquid medium comprising optionally an organic source of silica,
d) mixing the medium a), b) and the optional c) at conditions effective to crystallize the desired metallosilicate,
e) recovering the desired metallosilicate,
wherein in the mixture a)+b)+c), before crystallization,
the ratio Si org/Si inorganic is < 0.3 , advantageously < 0.2 and preferably 0, the molar ratio OH⁻/SiO₂ is at least 0.3, preferably from 0.3 to 0.6 more preferably from 0.33 to 0.6 .

In another embodiment the present invention relates to a process for making a crystalline metallosilicate with high Si/Metal ratio comprising:
a) providing an aqueous medium comprising OH⁻ anions and a metal source,
b) providing an aqueous medium comprising inorganic water insoluble source of silicon,
c) optionally providing a non aqueous liquid medium comprising optionally an organic source of silica,
d) mixing the medium a), b) and the optional c) at conditions effective to partly crystallize the desired metallosilicate,
e) cooling down the reaction mixture a)+b)+c) to about room temperature,
f) decreasing the pH of the reaction mixture by at least 0.1 preferably by 0.3 to 4, more preferably by 0.5 to 3,
g) subjecting the resulting mixture of step f) at conditions effective to continue the crystallization of the desired metallosilicate,
h) recovering the desired metallosilicate,
wherein at step d) in the mixture a)+b)+c), before crystallization,
the ratio Si org/Si inorganic is < 0.3 , advantageously < 0.2 and preferably 0, the molar ratio OH⁻/SiO₂ is at least 0.3, preferably from 0.3 to 0.6 and more preferably from 0.33 to 0.6 .

The operating parameters of the crystallization of step g) could be the same or different as the operating parameters in the crystallisation of step d).

Advantageously the pH of the mixture a)+b)+c), before crystallization, is higher than 13, preferably higher than 13.1, more preferably higher than 13.2, still more preferably higher than 13.3 and most preferred higher than 13.4.

The high Si/Metal in said synthesis is at least 12, preferably at least 24, advantageously higher than 40, preferably from 40 to 100.

Advantageously, the non-aqueous liquid medium comprises an organic solvent which is substantially water insoluble or water immiscible. Preferably, the organic solvent comprises at least one of an alcohol having at least 5 carbon atoms or a mercaptan having at least 5 carbon atoms. Preferably, the alcohol has up to 18 carbon atoms and the mercaptan has up to 18 carbon atoms.

Organic template is different from non aqueous liquid medium/solvent because the template cannot be recycled. The template is a nitrogen or phosphorus containing organic compound irreversibly consumed in the synthesis and has to be removed from zeolite pore by burning. On the contrary, the non aqueous liquid medium/solvent can be recovered and used for the further synthesis.

Thus, this invention provides a solution for the environmental friendly and more economical synthesis of zeolite with reduced acidity.

Lower aliphatic alcohols miscible with water and/or ammonium hydroxide, seeding techniques are not required for this recipe but can be used.

Advantageously, the inorganic source of silicon is selected from at least one of precipitated silica, pyrogenic(fumed) silica, and an aqueous colloidal suspension of silica. Preferably, the inorganic source of silicon has a limited solubility in the water before addition of alkali medium.

The decrease of pH in step f) can be made by any means and advantageously by adding a pH lowering agent. Said pH lowering agent can be any water soluble compound or a mixture of compounds used in concentration sufficient for providing the pH of the aqueous solution lower by 0.1 than pH value of reaction mixture after the first crystallization step. The pH is lowered by at least 0.1 preferably by 0.3 to 4, more preferably by 0.5 to 3. Advantageously, the lowering pH agent is an organic or inorganic acids or a salt providing acidic pH. The organic acids may comprise an organic acid such as citric acid, formic acid, oxalic acid, tartaric acid, malonic acid, succinic acid, glutaric acid, adipic acid, maleic acid, phthalic acid, isophthalic acid, fumaric acid, nitrilotriacetic acid, hydroxyethylenediaminetriacetic acid, ethylenediaminetetracetic acid, trichloroacetic acid trifluoroacetic acid or a salt of such an acid (e.g. the sodium salt) or a mixture of two or more of such acids or salts. The inorganic acids may comprise an inorganic acid such as nitric acid, hydrochloric acid, methansulfuric acid, sulfuric acid, phosphoric, carbonic or a salt of such an acid (e.g. the sodium or ammonium salts) or a mixture of two or more of such acids or salts.

Preferably, the organic source of silicon is a tetraalkyl orthosilicate.

Advantageously, the metal source is selected from at least one of the metal oxide, a metal salt, and a metal alkoxide.

Advantageously, the metallosilicate is an aluminosilicate (Metal is Al), and the source of aluminum is advantageously selected from at least one of hydrated alumina dissolved in an alkaline solution, aluminum metal, a water-soluble aluminum salt, such as aluminum sulphate or aluminium nitrate or aluminium chloride, sodium aluminate and an alkoxide, such as aluminum isopropoxide.

Advantageously, the metallosilicate is a borosilicate, and the source of boron is selected from at least one of hydrated boron oxide dissolved in an alkaline solution, a water-soluble boron salt, such as boron chloride, and an alkoxide.

Advantageously, the metallosilicate is a ferrosilicate, and the source of iron is a water soluble iron salt.

Advantageously, the metallosilicate is a gallosilicate, and the source of gallium is a water soluble gallium salt.

Advantageously, the metallosilicate is a titanosilicate, and the source of titanium is selected from at least one of titanium halides, titanium oxyhalides, titanium sulphates and titanium alkoxides.

Advantageously, the source of OH⁻ anions is sodium hydroxide.

The present invention additionally provides the use of the crystalline metallosilicate composition obtained by the process of the present invention as a catalyst component in a hydrocarbon conversion process.

Advantageously, the medium b) and c) are mixed first and medium a) is further added slowly in the mixture b)+c) until a hydrogel is obtained. Then the crystallization is made by heating advantageously under stirring conditions. Further to the crystallization there is a cooling, a filtration, a washing, a drying and finally a calcination step as in any zeolite synthesis.

### [Detailed description of the invention]

Metallosilicates selected from the group MFI (ZSM-5, silicalite, TS-1), can be produced by the process of the present invention.

These zeolites and their isotypes are described in "Atlas of Zeolite Structure Types", eds. W. H. Meier, D. H. Olson and Ch. Baerlocher, Elsevier, Fourth Edition, 1996, which is hereby incorporated by reference. The structure types are provided by the "IUPAC Commission of Zeolite Nomenclature". The conventional procedure for the synthesis of these zeolite is given in "Verified synthesis of zeolytic materials, eds H. Robson, Elsevier 2001.

The metallosilicates obtained by the process of the present invention may comprise a charge balancing cation M selected from the group consisting of hydrogen, ammonium, monovalent, divalent and trivalent cations and mixtures thereof.

The sources of the various elements of the metallosilicate may be any of those found in the commerce or prepared on purpose. For example, the source of silicon may be a silicate, e.g., a tetraalkyl orthosilicate, precipitated or pyrogenic silica, or preferably an aqueous colloidal suspension of silica. When the metallosilicate is an aluminosilicate zeolite, the source of aluminum is preferably hydrated alumina dissolved in an alkaline solution or aluminum metal, a water-soluble aluminum salt, e.g., aluminum sulphate or aluminium chloride, sodium-aluminate or an alkoxide, e.g., aluminum isopropoxide. When the metallosilicate is a borosilicate zeolite, the source of boron is preferably hydrated boron oxide dissolved in an alkaline solution or a water-soluble boron salt, e.g., boron chloride or an alkoxide. When the metallosilicate is a ferrosilicate or gallosilicate, the source of iron or gallium can almost be any iron or gallium salts that is readily soluble in water. When the metallosilicate is titanosilicate, the source of titanium can be titanium halides, titanium oxyhalides, titanium sulphates or titanium alkoxides. The atom/atom ratio of silicon to metal depends on the metal and on the use of the metallosilicate and is at least 2/1 to about 10000/1, preferably from 5/1 to about 5000/1 and most preferred from about 10/1 to 1000/1. The source of M cations may be alkali or alkaline earth hydroxides or salts. M may also be ammonium hydroxide or salts. The M cation will impact the pH of the crystallising medium. The proportion of the source of OH⁻ in the aqueous medium a) has to be in accordance with the M cation to comply with the molar ratio OH⁻/SiO₂ of at least 0.3 and preferably from 0.3 to 0.6 in the mixture a)+b)+c) at step d).

The organic solvent medium preferably is essentially water-insoluble or water-immiscible. The organic solvent medium preferably contains at least one alcohol or mercaptan, which is essentially water-insoluble. Examples of alcohols or mercaptans which are essentially water-insoluble are alcohols or mercaptans with at least 5 up to about 18 carbons. The organic solvent medium can optionally contain other water-insoluble organic compounds that do not bear an alcohol or mercaptan functional group. A person skilled in the art knows how to alter the hydrophobicity of the organic medium when required for the synthesis of a particular metallosilicate. Organic compounds that may be employed together with the required amount of water-insoluble alcohols or mercaptans can be halohydrocarbons, paraffinic, cycloparaffinic, aromatic hydrocarbons or mixtures thereof.

The order of mixing of a), b) and c) is not essential and will depend on the zeolite being prepared. Optionally the crystallisation medium (a)+b)+c)) may be aged at a temperature at which no crystallisation occurs, optionally nucleation may be started. Persons skilled in the art know equipment used to prepare the zeolite crystals of the present invention. Generally, metallosilicates can be prepared by using autoclaves, which have sufficient agitation to homogenise the crystallisation mixture during heat up until the effective nucleation and crystallisation temperature of the mixture is achieved. The crystallisation vessel can be made of a metal or metal alloys resisting the conditions of the crystallisation or optionally can be coated with a fluorocarbon such as Teflon®™. Other means of introducing agitation known to one skilled in the art can be employed, such as pumping the synthesis mixture from one part of the autoclave to another.

In an advantageous embodiment the crystallisation medium obtained by mixing a), b) and c) is maintained under stirring conditions at room temperature for a period of 10 minutes to 2 hours. Then the crystallization medium is submitted to autogenous pressure and elevated temperature. The reaction mixture is heated up to the crystallization temperature that may range from about 120°C to 250°C, preferably from 130°C to 250°C, most preferably from 160°C to 250°C. Heating up to the crystallization temperature is typically carried for a period of time ranging from about 0,5 to about 30 hours, preferably from about 1 to 12 hours, most preferably from about 2 to 9 hours. The temperature may be increased stepwise or continuously. However, continuous heating is preferred. The crystallization medium may be kept static or agitated by means of tumbling or stirring the reaction vessel during hydrothermal treatment. Preferably, the reaction mixture is tumbled or stirred, most preferably stirred. The temperature is then maintained at the crystallization temperature for a period of time ranging from 2 to 200 hours. Heat and agitation is applied for a period of time effective to form crystalline product. In a specific embodiment, the reaction mixture is kept at the crystallization temperature for a period of from 16 to 96 hours. Any oven such as a conventional oven and a microwave oven can be used.

The operating parameters of the crystallization of step g) could be the same or different as the operating parameters in the crystallisation of step d).

Typically, the crystalline metallosilicate is formed as a slurry and can be recovered by standard means, such as by sedimentation, centrifugation or filtration. The separated crystalline metallosilicate is washed, recovered by sedimentation, centrifugation or filtration and dried at a temperature of typically from about 25°C to about 250°C, and more preferably from 80°C to about 120°C. Calcination of the metallosilicate is known per se. The activation process is typically accomplished by calcining, or essentially heating the metallosilicate at a temperature of from 200 to 800°C in the presence of an oxygen-containing gas. In some cases, it may be desirable to heat the metallosilicate in an environment having a low oxygen concentration.

Once the crystalline metallosilicate is made, it can be used as itself as a catalyst. In another embodiment it can be formulated into a catalyst by combining the crystalline metallosilicate with other materials that provide additional hardness or catalytic activity to the finished catalyst product.

The crystals prepared by the instant invention can be formed into a wide variety of forms. In cases where a catalyst is produced from the metallosilicate produced by the present invention, the catalyst needs to possess a shape to be applicable in industrial reactors. The crystals can be shaped before drying or partially dried and then shaped or the crystals can be calcined to remove organic template and then shaped. In the case of many catalysts, it is desirable that crystalline zeolites prepared by the process of the present invention are incorporated with binder material resistant to the temperature and other conditions employed in organic conversion processes. It will be easily understood by the person skilled in the art that binder material does not contain the metal element that is incorporated into the framework of the metallosilicate characterised by a spatial distribution of the constituting elements and characterised by a surface enriched in silicon. In addition, the binder material does not contain elements that destroy the spatial distribution of the constituting elements of the metallosilicate or the surface enriched in silicon of the metallosilicate. Examples of binder material may be composited with a porous matrix material, such as silica, zirconia, magnesia, titania, silica-magnesia, silica-zirconia, silica-thoria, and silica-titania, as well as ternary compositions, such as silica-magnesia-zirconia. The relative proportions of metallosilicate component and binder material will vary widely with the metallosilicate content ranging from between about 1 to about 99 percent by weight, more preferably in the range of about 10 to about 85 percent by weight of metallosilicate component, and still more preferred from about 20 to about 80 percent. The metallosilicate prepared by the process of the present invention may be further ion exchanged after calcination to remove organic template as is known in the art either to replace at least in part the original charge-balancing cations present in the metallosilicate with a different cation, e.g. a Group IB to VIII of the Periodic Table metal such as tungsten, molybdenum, nickel, copper, zinc, palladium, platinum, calcium or rare earth metal, or to provide a more acidic form of the zeolite by exchange of original charge-balancing cation with ammonium cations, followed by calcination of the ammonium form to provide the acidic hydrogen form. The acidic form may be readily prepared by ion exchange using a suitable reagent such as ammonium nitrate, ammonium carbonate or protonic acids, like HCl, HNO3 and H3PO4. The metallosilicate may then be calcined at a temperature of 400 to 550° C to remove ammonia and create the hydrogen form. Particularly preferred cations will depend on the use of the metallosilicate and include hydrogen, rare earth metals, and metals of Groups IIA, 1IIA, IVA, IB, IIB, IIIB, IVB, and VIII of the Periodic Table of the Elements. The metallosilicate prepared by the process of the present invention may be further supported by at least one different precursor of metals that have catalytic activity after known pretreatments, e.g. a Group IIA, IIIA to VIIIA, IB, IIB, IIIB to VIB of the Periodic Table metal such as tungsten, molybdenum, nickel, copper, zinc, palladium, platinum, gallium, tin, and/or tellurium metal precursors.

The metallosilicate of the present invention by itself or in combination with one or more catalytically active substances can have high activity, high selectivity, high stability, or combinations thereof when used as catalysts for a variety of hydrocarbon conversion processes. Examples of such processes include, as non-limiting examples, the following:
1. The alkylation of aromatic hydrocarbons with light olefins to provide short chain alkyl aromatic compounds, e.g., the alkylation of benzene with propylene to provide cumene and alkylation of benzene with ethylene to provide ethylbenzene. Typical reaction conditions include a temperature of from about 100° C. to about 450° C, a pressure of from about 5 to about 80 bars, and an aromatic hydrocarbon weight hourly space velocity of from 1 hr⁻¹ to about 100 hr⁻¹.
2. The alkylation of polycyclic aromatic hydrocarbons with light olefins to provide short chain alkyl polycyclic aromatic compounds, e.g., the alkylation of naphthalene with propylene to provide mono-or di-isopropyl-naphthalene. Typical reaction conditions include a temperature of from about 100° C to about 400° C, a pressure of from about 2 to about 80 bars, and an aromatic hydrocarbon weight hourly space velocity of from 1 hr⁻¹ to about 100 hr⁻¹
3. The alkylation of aromatic hydrocarbons, e.g., benzene and alkylbenzenes, in the presence of an alkylating agent, e.g., alkyl halides and alcohols having 1 to about 20 carbon atoms. Typical reaction conditions include a temperature of from about 100° C to about 550° C, a pressure of from about atmospheric to about 50 bars, a weight hourly space velocity of from about 1 hr⁻¹ to about 1000 hr⁻¹ and an aromatic hydrocarbon/alkylating agent mole ratio of from about 1/1 to about 20/1.
4. The alkylation of aromatic hydrocarbons, e.g., benzene, with long chain olefins, e.g., C14 olefin. Typical reaction conditions include a temperature of from about 50° C to about 300° C, a pressure of from about atmospheric to about 200 bars, a weight hourly space velocity of from about 2 hr⁻¹ to about 1000 hr⁻¹ and an aromatic hydrocarbon/olefin mole ratio of from about 1/1 to about 20/1.
5. The alkylation of phenols with olefins or equivalent alcohols to provide long chain alkyl phenols. Typical reaction conditions include temperatures from about 100° C to about 250° C, pressures from about 1 to 50 bars and total weight hourly space velocity of from about 2 hr⁻¹ to about 10 hr⁻¹.
6. The transalkylation of aromatic hydrocarbons in the presence of polyalkylaromatic hydrocarbons. Typical reaction conditions include a temperature of from about 150° C to about 550° C, a pressure of from about atmospheric to about 100 bars, a weight hourly space velocity of from about 1 hr⁻¹ to about 500 hr⁻¹ and an aromatic hydrocarbon/polyalkylaromatic hydrocarbon mole ratio of from about 1/1 to about 20/1.
7. The isomerization of aromatic (e.g., xylene) feedstock components. Typical reaction conditions for such include a temperature of from about 200° C to about 550° C, a pressure of from about 1 bars to about 50 bars, a weight hourly space velocity of from about 0.1 hr⁻¹ to about 200 hr⁻¹ and a hydrogen/hydrocarbon mole ratio of from about 0 to about 100.
8. The disproportionation of toluene to make benzene and paraxylene. Typical reaction conditions including a temperature of from about 200° C to about 600° C, a pressure of from about atmospheric to about 60 bar, and a weight hourly space velocity of from about 0.1 hr⁻¹ to about 30 hr⁻¹.
9. The catalytic cracking of naphtha feed to produce light olefins. Typical reaction conditions include from about 450° C to about 650° C, pressures of atmospheric to about 8 bars and weight hourly space velocity of from about 5 hr⁻¹ to 50 hr⁻¹.
10. The catalytic cracking of butenes feed to produce light olefins, e.g. propylene. Typical reaction conditions include from about 450° C to about 650° C, pressures of atmospheric to about 8 bars and weight hourly space velocity of from about 5 hr⁻¹ to 50 hr⁻¹.
11. The catalytic cracking of high molecular weight hydrocarbons to lower weight hydrocarbons. The metallosilicate of the instant invention may be employed in combination with conventional catalyst used in fluid catalytic cracking units. Typical reaction conditions for catalytic cracking include temperatures of from about 450° C to about 650° C, pressures of from about 0.1 bar to about 10 bars, and weight hourly space velocities of from about 1 hr⁻¹ to about 300 hr⁻¹.
12. The dewaxing of hydrocarbons by selectively removing straight chain paraffins. Typical reaction conditions include a temperature between about 200° C and 450° C, a pressure from 10 to up to 100 bars and a liquid hourly space velocity from 0.1 hr⁻¹ to 20 hr⁻¹.
13. The hydrocracking of heavy petroleum feedstocks. The metallosilicate catalyst contains an effective amount of at least one hydrogenation component of the type employed in hydrocracking catalysts.
14. A combination hydrocracking/dewaxing process in which optionally more than one metallosilicate or combinations of metallosilicate with other zeolites or molecular sieves are employed.
15. The conversion of light paraffins to olefins and/or aromatics. Typical reaction conditions include temperatures from about 425° C to about 750° C and pressures from about I to about 60 bars.
16. The conversion of light olefins to gasoline, distillate and lube range hydrocarbons. Typical reaction conditions include temperatures of from about 175° C to about 450° C and a pressure of from about 3 to about 100 bars.
17. The conversion of naphtha (e.g. C6-C10) into products having a substantial higher octane aromatics content by contacting the hydrocarbon feed with the catalyst at a temperature in the range of from about 400° C to 600° C, preferably 480° C to 550° C at pressures ranging from atmospheric to 40 bar and liquid hourly space velocities ranging from 0.1 hr⁻¹ to 35 hr⁻¹.
18. The reaction of alcohols with olefins to provide mixed ethers, e. g., the reaction of methanol or ethanol with isobutene and/or isopentene to provide methyl-t-butyl ether (MTBE) or ethyl-t-butyl ether (ETBE) and/or t-amyl methyl ether (TAME) or t-amyl-ethyl-ether (TAEE). Typical conversion conditions including temperatures from about 20° C to about 250° C, pressures from 2 to about 100 bar, a liquid hourly space from about 0.1 hr⁻¹ to about 200 hr⁻¹ and an alcohol to olefin molar feed ratio from about 0.2/1 to about 3/1.
19. The decomposition of ethers like MTBE, ETBE, TAME or TAEE into isobutene and isopentenes and the corresponding alcohol. Typical conversion conditions including temperatures from about 20° C to about 300° C, pressures from 0.5 to about 10 bars, a liquid hourly space from about 0.1 hr⁻¹ to about 200 hr⁻¹.
20. The conversion of oxygenates, e.g., alcohols, such as methanol, or ethers, such as dimethylether, or mixtures thereof to hydrocarbons including olefins and aromatics with reaction conditions including a temperature of from about 275° C to about 600° C, a pressure of from about 0.5 bar to about 60 bar and a liquid hourly space velocity of from about 0.1 hr⁻¹ to about 100 hr⁻¹
21. The oligomerization of straight and branched chain olefins having from about 2 to about 10 carbon atoms. The oligomers that are the products of the process have 6 to about 50 carbons, which are useful for both fuels blending feedstock, as solvents, lube oils, alkylation agents and reactants for preparing various kinds of oxygen containing chemicals. The oligomerization process is generally carried out at a temperature in the range of from about 150° C to about 350° C, a liquid hourly space velocity of from about 0.2 hr⁻¹ to about 70 hr⁻¹ and a pressure of from about 5 to about 100 bar.

The invention is illustrated by the following non-limiting Examples.

In the following Examples, the techniques used to produce and characterise the obtained materials are given.
X-ray diffraction was used to obtain a diffraction pattern, to ensure that desired crystal structure is confirmed or to detect presence of foreign crystalline phases and to determine degree of crystallinity compared with a reference zeolite. The diffractometer was a Philips PW1830 (Co Kα).
An MFI aluminosilicate was prepared by mixing solutions a)b) and c).
***Solution a) :*** xxx g of sodium hydroxyde in xxx ml of distilled water and xxx g of Al(NO₃)₃.9 H₂O was mixed, followed by 15 min homogenisation (Table 2)
***Solution b)* :** xxx ml of distilled water and xxx ml of colloidal silica solution containing 40%wt SiO₂ (Ludox AS-40) and (Table 2).
***Solution c):*** xxx ml of hexanol-1, followed by 15 min homogenisation (Table 2)

Solution b) and c) were mixed in an autoclave for a period of 15 minutes and a hydrogel was obtained by adding slowly solution a). After stirring for 30 min at room temperature, the crystallization reaction was performed. The synthesis was performed via 24 hours conventional thermal treatment under autogeneous pressure at 170 °C (trumbling autoclave with teflon stirring ball, 50t/min). Then the sample was directly recovered from reaction medium after the first synthesis.

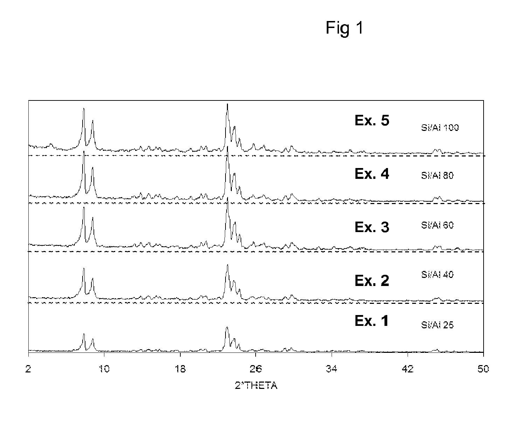

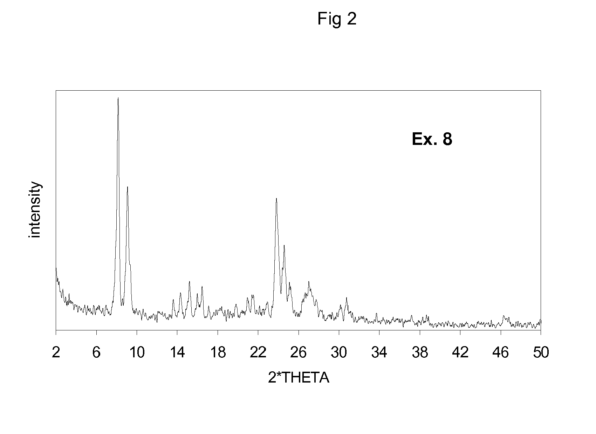

The product was then cooled and washed with 0.75 liters of distilled water, dried at 110°C for 16 hours and then calcined at 600°C for 5 hours. The accurate amount of each compound is reported in table 2, and the synthesis conditions and molar ratio of the reagents are in table 1.
The XRD patterns of the samples synthesized in bi-phasic medium are displayed on
fig 1 (ex 1-5),
The XRD patern of the sample synthesized in monophasic medium is displaed on fig 2 (ex 8).
The XRD patterns demonstrated a crysallinity and a phase composition of the samples.
The XRD patterns showed the absence of any significant impurity in the calcined MFI zeolites crystallized from the solution in range of molar Si/Al ratio 25-100.

The reproducibility is assured at Si/Al ratio 40 with 10 times synthesis resulting in pure ZSM-5.
In case of Si/Al ratio 80, the impurity can appear in low quantities in reproducibility experiments, but can be eliminated through a longer synthesis of 72 hours or 5 hours calcination at 600 °C.

**Table 1**

| | | | | molar composition | | | | volume | |
|---|---|---|---|---|---|---|---|---|---|
| Example | Structure | Initial pH | Si/Al crystals | Si/Al solution | Na/SiO₂ | OH⁻/SiO₂ | H₂O/SiO₂ | V_{org}/V_{aq} | Solvent |
| 1 | MFI | 13.30 | 24 | 25 | 0.33 | 0.33 | 32 | 0.5 | 1-hexanol |
| 2 | MFI | 13.45 | 35 | 40 | 0.33 | 0.33 | 32 | 0.5 | 1-hexanol |
| 3 | MFI | 13.47 | 40 | 60 | 0.33 | 0.33 | 32 | 0.5 | 1-hexanol |
| 4 | MFI | 13.49 | 42 | 80 | 0.33 | 0.33 | 32 | 0.5 | 1-hexanol |
| 5 | MFI | 13.51 | 53 | 100 | 0.33 | 0.33 | 32 | 0.5 | 1-hexanol |
| 6 | MFI | 13.42 | 30 | 40 | 0.33 | 0.33 | 32 | 0 | none |
| 7 | MFI | 13.45 | 45 | 60 | 0.33 | 0.33 | 32 | 0 | none |
| 8 | MFI | 13.48 | 49 | 80 | 0.33 | 0.33 | 32 | 0 | none |

**Table 2**

| | Solution a) | | | Solution c) | Solution b) | |
|---|---|---|---|---|---|---|
| Example | NaOH (g) | H₂O (ml) | Al(NO3)₃×9 H2O (g) | Hexanol-1 (ml) | Ludox AS-40 (ml) | H₂O (ml) |
| 1 | 0.3056 | 6.6667 | 0.3474 | 6,6667 | 2.6813 | 3.9854 |
| 2 | 0.3056 | 6.6667 | 0.2171 | 6,6667 | 2.6813 | 3.9854 |
| 3 | 0.3056 | 6.6667 | 0.1447 | 6,6667 | 2.6813 | 3.9854 |
| 4 | 0.3056 | 6.6667 | 0.1085 | 6,6667 | 2.6813 | 3.9854 |
| 5 | 0.3056 | 6.6667 | 0.0868 | 6,6667 | 2.6813 | 3.9854 |
| 6 | 0.4583 | 10.000 | 0.3256 | 0 | 4.0219 | 5.9781 |
| 7 | 0.4583 | 10.000 | 0.2171 | 0 | 4.0219 | 5.9781 |
| 8 | 0.4583 | 10.000 | 0.1628 | 0 | 4.0219 | 5.9781 |

## Claims

1. Process for making a crystalline metallosilicate with high Si/Metal ratio comprising:
a) providing an aqueous medium comprising OH⁻ anions and a metal source,
b) providing an aqueous medium comprising an inorganic water insoluble source of silicon,
c) optionally providing a non aqueous liquid medium comprising optionally an organic source of silica,
d) mixing the medium a), b) and the optional c) at conditions effective to crystallize the desired metallosilicate,
e) recovering the desired metallosilicate,
wherein in the mixture a)+b)+c), before crystallization,
the ratio Si org/Si inorganic is < 0.3 ,
the molar ratio OH⁻/SiO₂ is at least 0.3.

2. Process for making a crystalline metallosilicate with high Si/Metal ratio comprising:
a) providing an aqueous medium comprising OH⁻ anions and a metal source,
b) providing an aqueous medium comprising inorganic water insoluble source of silicon,
c) optionally providing a non aqueous liquid medium comprising optionally an organic source of silica,
d) mixing the medium a), b) and the optional c) at conditions effective to partly crystallize the desired metallosilicate,
e) cooling down the reaction mixture a)+b)+c) to about room temperature,
f) decreasing the pH of the reaction mixture by at least 0.1,
g) subjecting the resulting mixture of step f) at conditions effective to continue the crystallization of the desired metallosilicate,
h) recovering the desired metallosilicate,
wherein at step d) in the mixture a)+b)+c), before crystallization,
the ratio Si org/Si inorganic is < 0.3 ,
the molar ratio OH⁻/SiO₂ is at least 0.3.

3. Process according to claim 2 wherein at step f) the decrease of pH is of 0.3 to 4 .

4. Process according to claim 3 wherein at step f) the decrease of pH is of 0.5 to 3 .

5. Process according to any one of the preceding claims wherein at step d) the ratio Si org/Si inorganic is < 0.2.

6. Process according to claim 5 wherein at step d) the ratio Si org/Si inorganic is 0.

7. Process according to any one of the preceding claims wherein at step d) in the mixture a)+b)+c), the molar ratio OH⁻/SiO₂ is from 0.3 to 0.6 .

8. Process according to any one of the preceding claims wherein the metallosiliocate is an aluminosilicate.

9. Process according to any one of the preceding claims wherein the metallosilicate is an MFI.

10. Process according to any one of the preceding claims wherein the inorganic source of silicon is selected from at least one of precipitated silica, pyrogenic silica (or fumed silica), and an aqueous colloidal suspension of silica.

11. Process according to any one of the preceding claims wherein the medium b) and c) are mixed first and medium a) is further added slowly in the mixture b)+c) until a hydrogel is obtained.

12. Use of the crystalline metallosilicate composition obtained by the process according to any one of the preceding claims as a catalyst component in a hydrocarbon conversion process.
